# EUROPÄISCHE PATENTSCHRIFT

(11) **EP 3 395 648 B1**
(45) Veröffentlichungstag und Bekanntmachung des Hinweises auf die Patenterteilung: **13.11.2019**
(21) Anmeldenummer: 18160928.0
(22) Anmeldetag: 09.03.2018
(51) Int. Cl.: B62D 5/00, B62D 1/22

(54) **LENKSYSTEM FÜR EIN FAHRZEUG**
STEERING SYSTEM FOR A VEHICLE
SYSTÈME DE DIRECTION POUR UN VÉHICULE

(30) Priorität: 27.04.2017 DE 102017109081
(43) Veröffentlichungstag der Anmeldung: 31.10.2018
(73) Patentinhaber: Schaeffler Paravan Technologie GmbH & Co. KG, 91074 Herzogenaurach (DE)
(72) Erfinder: ARNOLD, Roland, 72539 Pfronstetten-Aichelau (DE)
(74) Vertreter: Kohler Schmid Möbus Patentanwälte

(56) Entgegenhaltungen:
- DE-A1- 10 329 292
- DE-A1- 10 333 281
- DE-A1-102009 043 606

## Beschreibung

Die Erfindung betrifft ein Lenksystem mit einem Lenkmodul für ein Fahrzeug mit einem Lenkeingabeelement und einer zumindest einen Sensor aufweisenden Sensoreinrichtung zur Erfassung der Position oder Stellung des Lenkeingabeelements sowie einer auf das Lenkeingabeelement wirkenden Stelleinrichtung mit einem ersten Aktor, gemäß dem Oberbegriff von Anspruch 1.

Für Kraftfahrzeuge sind auch so genannte *Steer-by-Wire-*Systeme bekannt, bei denen das Lenkrad mittels eines Sensors am Lenkrad nur noch das Sollwertsignal für die Lenkbetätigung erzeugt. Es liegt demnach keine mechanische Verbindung des Lenkrads zu einem Lenkgetriebe vor. Auf eine Lenksäule kann häufig verzichtet werden. Durch den Wegfall einer mit der gelenkten Vorderachse starr verbundenen Lenksäule geht das Straßengefühl, welches bei einer herkömmlichen Lenkung durch das Rückstellmoment, d. h. ein Handmoment am Lenkrad, dem Fahrer mitgeteilt wird, verloren.

Aus der DE 199 12 169 A1 ist eine so genannte *Force-Feedback*-Einheit bekannt, mit deren Hilfe dieses Straßengefühl wiederhergestellt werden soll. Die Größe des der Drehbewegung des Lenkrads als Lenkwiderstand entgegenzusetzenden Moments wird durch eine Steuereinheit gesteuert, in welcher aufgrund von entsprechend erfassten Einflussgrößen die erforderlichen Spannungswerte für die Steuerung ermittelt werden.

Aus der EP 2 214 945 B1 ist ein behindertengerechtes Fahrzeug mit einer Steuerung bekannt. Das Fahrzeug weist ein Lenkeingabemodul mit einer mechanischen Schnittstelle auf, an die verschiedene austauschbare Bedienelemente zum Lenken des Fahrzeugs anbringbar sind. Das Lenkeingabemodul weist einen Sensor auf, um die Bewegung des Bedienelements aufzunehmen, wobei weiterhin mindestens ein Lenkaktuator zur Ausführung des Lenkwunsches am Fahrzeug vorgesehen ist, mit dem das Lenkeingabemodul verbunden ist. Für jedes Lenkeingabemodul ist mindestens ein Hauptcontrollerboard vorhanden, um die Einstellungen der individuellen Parameter betreffend Lenkwinkel und Geradeausstellung in Bezug auf ein bestimmtes der austauschbaren Bedienelemente zum Lenken des Fahrzeugs vorzunehmen.

Die DE 103 33 281A1 offenbart ein Verfahren und ein elektronisches Steuerungssystem zur Steuerung mindestens einer mechanischen Stelleinrichtung. Bei dem beschriebenen Verfahren wird zwischen mindestens einem zugeordneten Peripheriegerät und mindestens einer Steuereinrichtung ein Signal ausgetauscht, wobei Recheneinheiten zugeordnete Werte für das Signal miteinander verglichen werden. Dieses Dokument zeigt die Merkmale des Oberbegriffs des unabhängigen Anspruchs.

Die DE 103 29 292 A1 offenbart eine Vorrichtung zur Erzeugung eines Drehmoments an einer manuell über eine Lenkhandhabe zu betätigenden Welle. Dazu weist die Vorrichtung einen auf die Welle wirkenden

Elektromotor auf. Der Elektromotor wirkt über einen Riemenantrieb auf die Welle.

Die DE 10 2009 043 606 A1 offenbart einen Lenkassistent für ein Fahrschul-Kfz. Dabei ist ein zusätzliches Steuergerät vorgesehen, welches an das serienmäßige Steuergerät angedockt wird und mit einer zusätzlichen Lenkeinheit verbunden ist.

Nachteilig an den bekannten Lenksystemen ist, dass der Gesetzgeber diese Lenksysteme nach wie vor nicht für ausreichend zuverlässig hält, um ein ausschließliches Fahren durch "*Steer-by-Wire*" zu erlauben.

Aufgabe der vorliegenden Erfindung ist es daher, ein Lenksystem bereitzustellen, durch welche die entsprechenden Sicherheitsanforderungen erfüllt werden.

Gelöst wird dieses Aufgabe erfindungsgemäß durch ein Lenksystem mit den Merkmalen des Anspruchs 1.

Es sind unterschiedliche Lenkeingabeelemente denkbar. Beispielsweise kann als Lenkeingabeelement ein Lenkrad, ein Zweiradlenker, ein Joystick oder dergleichen vorgesehen sein.

Die Aktoren der Stelleinrichtung wirken gleichsinnig, um eine Bewegung in dieselbe Richtung am Lenkeingabeelement einzuleiten. Die Aktoren können beispielsweise als Hydraulikmotoren oder Elektromotoren ausgeführt sein. Auch ist es denkbar, die Aktoren als Linearmotoren auszuführen.

Die Sensoreinrichtung kann redundant ausgebildet sein und zumindest zwei, vorzugsweise drei, Sensoren zur Erfassung der Position oder Stellung des Lenkeingabeelements aufweisen. Beispielweise können die Sensoren als Winkelmesseinrichtungen, z. B. als Potentiometer, ausgeführt sein und einen Lenkeingabewinkel eines Lenkeingabeelements erfassen. Weiterhin kann eine Auswahleinrichtung vorgesehen sein, die ein Sensorsignal der zwei oder drei Sensoren auswählt, um dieses an ein Steuergerät weiterzugeben. Vorzugsweise wird das Sensorsignal ausgewählt, welches mit der größten Wahrscheinlichkeit die Position oder Stellung des Lenkeingabeelements richtig wiedergibt. Wenn die Sensoreinrichtung redundant ausgeführt ist, wird die Sicherheit des Lenkmoduls weiter erhöht.

Das Lenkmodul kann eine Schnittstelle zur signaltechnischen Verbindung mit einem Steuergerät aufweisen. Insbesondere kann das Lenkmodul über die Schnittstelle und ein Kabel mit einem Steuergerät verbunden sein. Dabei kann das Steuergerät kabelgebunden sowohl mit der Stelleinrichtung als auch mit der Sensoreinrichtung verbunden sein. Die signaltechnische Verbindung zwischen dem Lenkmodul und einem Steuergerät kann jedoch auch drahtlos ausgeführt sein. In diesem Fall kann die Schnittstelle des Lenkmoduls als Sende-/Empfangseinheit ausgebildet sein, um beispielsweise ein Funksignal zu übertragen und zu empfangen.

Die Zuverlässigkeit und Ausfallsicherheit des Lenkmoduls kann weiterhin dadurch erhöht werden, dass eine Schutzeinrichtung zum Schutz der Aktoren vor Überlastung vorgesehen ist. Im einfachsten Fall kann die Schutzeinrichtung als Widerstand ausgebildet sein, um den Strom zu begrenzen, mit dem ein Aktor angesteuert wird.

Zumindest einer der Aktoren kann als Elektromotor, insbesondere bürstenloser Elektromotor, ausgebildet sein. Der Vorteil eines bürstenlosen Elektromotors liegt darin, dass die Umpolung des Elektromotors am Lenkeingabeelement nicht wahrgenommen werden kann, sodass der Aktor das Straßengefühl eines Fahrzeuglenkers nicht beeinflusst.

Die Aktoren können mit dem Lenkeingabeelement über ein Übertragungselement, insbesondere einen Riemen oder eine Kette gekoppelt sein. Beispielsweise können die beiden Aktoren und das Lenkeingabeelement dreieckförmig angeordnet sein, wobei ein Riemen über die Abtriebe der Aktoren oder damit verbundener Zahnräder und eine mit dem Lenkeingabeelement verbundene Achse oder ein daran angeordnetes Zahnrad verläuft.

In diesem Zusammenhang ist es vorteilhaft, wenn die Position eines der Elemente erster Aktor, zweiter Aktor, Lenkeingabeelement bezüglich zumindest eines anderen der Elemente erster Aktor, zweiter Aktor, Lenkeingabeelement verstellbar ist, um das Übertragungselement spannen zu können. Dadurch kann eine zuverlässige Übertragung von Kräften von den ersten und zweiten Aktoren auf das Lenkeingabeelement schlupffrei, spielfrei und ohne Reaktionsverzögerung sichergestellt werden.

Das Lenkmodul kann einen Airbag aufweisen oder zumindest eingerichtet sein, einen Airbag aufzunehmen. Beispielsweise kann der Airbag in das Lenkeingabeelement integriert sein.

Das Lenkmodul kann ein Gehäuse aufweisen. Der Airbag kann im Gehäuse angeordnet sein.

Es ist ein Steuergerät vorgesehen, mit dem das Lenkmodul signaltechnisch verbunden ist. Dabei kann das Lenkmodul an beliebiger Position in oder an einem Fahrzeug positioniert werden, beispielsweise im Bereich eines Fahrersitzes, im Bereich eines Beifahrersitzes, im Bereich einer Rückbank, in einem Kommandostand oder in einer Fahrzeugkabine. Weiterhin ist es denkbar, das Lenkmodul außerhalb des Fahrzeugs zu positionieren und das Fahrzeug quasi fernzusteuern. Die Besonderheit des erfindungsgemäßen Lenksystems liegt darin, dass ein Fahrzeuglenker, unabhängig davon wo das Lenkmodul angeordnet ist, stets eine Rückmeldung erhält, wie sich das Fahrzeug auf der Straße verhält bzw. welche äußeren Einflüsse auf das Lenksystem wirken. Die Aktoren können durch das Steuergerät und/oder eine Überwachungseinrichtung überwacht werden. Wenn ein Aktor ausfällt, kann dies dem Fahrer signalisiert werden, sodass er das Fahrzeug mit nur einem Aktor sicher zum Stillstand bringen kann.

Das Steuergerät kann mit einem Lenksteller signaltechnisch verbunden sein und konfiguriert sein, unter Berücksichtigung der durch die Sensoreinrichtung erfassten Position oder Stellung des Lenkeingabeelements ein Ansteuersignal für den Lenksteller zu erzeugen. Der Lenksteller kann dabei an unterschiedlichen Stellen an einem Fahrzeug angeordnet und unterschiedlich ausgeführt sein. Beispielsweise kann der Lenksteller an einer Lenksäule eines Fahrzeugs angeordnet sein und eine Drehbewegung in die Lenksäule einleiten. Weiterhin ist es denkbar, dass der Lenksteller an einem Lenkgetriebe angeordnet ist. Außerdem ist es denkbar, dass der Lenksteller unmittelbar an einem gelenkten Rad angeordnet ist. Wenn das Lenksystem bei einem Raupenfahrzeug zum Einsatz kommt, kann der Lenksteller auch als Lenkbremse ausgebildet sein. Im Falle eines Fahrzeugs mit Knicklenkung kann der Lenksteller das Schwenken der beiden Fahrzeugteile zueinander bewirken. Der Lenksteller kann redundant ausgeführt sein und insbesondere zumindest zwei Aktoren zur Einleitung der Lenkbewegung aufweisen. Auch dadurch wird die Ausfallsicherheit des Lenksystems erhöht.

Es kann eine Sensoreinrichtung zur Erfassung einer die Fahrtrichtung des Fahrzeugs beschreibenden Größe vorgesehen sein und das Steuergerät kann konfiguriert sein, unter Berücksichtigung der erfassten Größe ein Ansteuersignal für die Stelleinrichtung zu erzeugen. Als die Fahrtrichtung des Fahrzeugs beschreibenden Größe können beispielsweise ein Radeinschlagwinkel, ein Drehwinkel bei knickgelenkten Fahrzeugen, ein Lenkwinkel, ein Lenkeingabewinkel eines weiteren Lenkeingabeelements (also nicht des Lenkeingabeelements des erfindungsgemäßen Lenkmoduls) erfasst werden. Mit anderen Worten kann die Erfassung einer die Fahrtrichtung des Fahrzeugs beschreibenden Größe beispielsweise an einer Lenksäule erfolgen. Die Lenksäule kann mit einem weiteren Lenkeingabeelement verbunden sein. Aufgrund der erfassten Größe kann die Stelleinrichtung des Lenkmoduls angesteuert werden und kann das Lenkeingabeelement des Lenkmoduls der Bewegung des weiteren Lenkeingabeelements nachgeführt werden. Die Lenkbewegung eines Fahrzeuglenkers am weiteren Lenkeingabeelement wird somit am Lenkeingabeelement des Lenkmoduls abgebildet. Diese Ausgestaltung bietet beispielsweise Vorteile bei einer Fahrschule. Ein Fahrschüler kann mit dem weiteren Lenkeingabeelement lenken. In einer Gefahrensituation kann der Fahrlehrer die Lenkung des Fahrzeugs mit dem Lenkeingabeelement des Lenkmoduls übernehmen (gegebenenfalls nach Betätigung eines Umschaltelements), wobei das Lenkeingabeelement des Lenkmoduls aufgrund der Nachführung des weiteren Lenkeingabeelements stets die richtige Stellung aufzeigt und aufweist, sodass eine sofortige Übernahme möglich ist. Dadurch, dass im Lenkmodul zwei Aktoren vorgesehen sind, wird die von einem Fahrzeuglenker vorgegebene Lenkwinkelstellung auf das Lenkeingabeelement sicher übertragen. Die gleichen Vorteile ergeben sich bei einem Fahrzeug, welches für autonomes Fahren eingesetzt wird. In einer Gefahrensituation, in der beispielsweise das autonome Fahrsystem nicht richtig reagiert, kann eine Person die Lenkung des Fahrzeugs über das Lenkeingabeelement des Lenkmoduls übernehmen. Das Lenkeingabeelement weist dabei beispielsweise eine dem Radeinschlag entsprechende Stellung auf, die aufgrund der die Fahrtrichtung beschreibenden Größe eingestellt wurde. Mit dem Lenkmodul ist es auch möglich, ein Fahrzeug von der Beifahrerposition aus zu lenken, beispielsweise ein Kommunalfahrzeug, bei dem der Straßenrand vom Fahrer eingesehen werden muss. Im normalen Straßenverkehrsbetrieb kann das Fahrzeug vom Fahrersitz mit der herkömmlichen Lenkung gelenkt werden.

Das Steuergerät kann konfiguriert sein, ein Ansteuersignal für die Stelleinrichtung zu erzeugen, um eine Lenkgegenkraft an dem Lenkeingabeelement zu bewirken. Das Ansteuersignal für die Stelleinrichtung zum Bewirken einer Lenkgegenkraft kann unter Berücksichtigung eines Sensorsignals erzeugt werden. Beispielsweise kann die Lenkgegenkraft unter Berücksichtigung des Sensorsignals der Sensoreinrichtung im Lenkmodul erzeugt werden. Alternativ oder zusätzlich ist es denkbar, eine Sensoreinrichtung an den Rädern oder am Lenkgetriebe vorzusehen und aufgrund dieses Sensorsignals die Lenkgegenkraft zu erzeugen. Als Sensorsignal kann auch ein Strom in einem Lenksteller erfasst werden. Die Sensoren zur Erzeugung des Sensorsignals können redundant vorgesehen sein. Insbesondere können die Sensoren dreifach redundant vorgesehen sein.

Es ist ein Umschaltelement vorgesehen , durch das von einem Passiv-Modus, in dem das Lenkeingabeelement des Lenkmoduls einem weiteren Lenkeingabeelement nachgeführt wird, in einen Aktiv-Modus, in dem das Lenkeingabeelement der Fahrzeuglenkung dient, umgeschaltet werden kann. Das Umschaltelement kann unterschiedlich ausgeführt sein. Beispielsweise kann es als Betätigungsring, als Knopf, als Touchscreen, als Hebel, als akustisches oder optisches Schaltelement ausgebildet sein.

Es kann eine Anzeigeeinrichtung vorgesehen sein, welche anzeigt, ob sich das Lenksystem in einem Aktiv-Modus oder Passiv-Modus befindet. Beispielsweise können eine oder mehrere LEDs zur Anzeige des Aktiv- und/oder Passiv-Modus vorgesehen sein.

Die Ausfallsicherheit des Lenksystems kann weiterhin erhöht werden, wenn das Steuergerät zumindest zwei, vorzugsweise drei redundant ausgeführte CPUs aufweist. Insbesondere kann vorgesehen sein, dass die Stelleinrichtung des Lenksystems und die Sensoreinrichtungen des Lenksystems redundant ausgebildet oder ausgeführt sind. Dabei können die mechanischen Stelleinrichtungen jeweils zwei Aktoren aufweisen, während die Sensoreinrichtungen jeweils drei Sensoren aufweisen können. Durch diese Maßnahme erhält das Lenksystem eine höchstmögliche Ausfallsicherheit.

Es können zumindest einige der für die Erzeugung der von dem Steuergerät an die Stelleinrichtung und/oder den Lenksteller ausgegebenen Ansteuersignale verwendeten Parameter einstellbar sein. Somit kann beispielsweise eingestellt werden, welche Eingangsgrößen des Steuergeräts in welcher Gewichtung für die Erzeugung eines Ansteuersignals berücksichtigt werden. Außerdem kann eingestellt werden, wie direkt oder indirekt die Stelleinrichtung oder der Lenksteller auf ein entsprechendes Sensorsignal als Eingangsgröße des Steuergeräts reagieren soll. Insbesondere kann eingestellt werden, in welchem Maße Momentänderungen, die bei Fahrbahnbelagsänderungen, Fahren auf Glatteis, Abdrücken eines Rads am Bordstein etc. auftreten, an das Lenkeingabeelement übertragen werden. Außerdem kann eine geschwindigkeitsabhängige Einstellung der Ansteuersignale erfolgen. Weiterhin ist es denkbar eine Anpassung auf unterschiedliche Benutzer des Lenksystems vorzunehmen.

Das Steuergerät kann konfiguriert sein, ein Ansteuersignal zu erzeugen, um das Lenkeingabeelement bei fehlender Lenkeingabe durch einen Benutzer in eine Nullstellung zu überführen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass erfindungsgemäße Besonderheiten deutlich sichtbar gemacht werden können. Die verschiedenen Merkmale können je einzeln für sich oder zu mehreren in beliebigen Variationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine schematische Darstellung eines Lenksystems;
- Fig. 2: eine Darstellung zur Erläuterung der Kopplung einer Stelleinrichtung eines Lenkmoduls mit einem Lenkeingabeelement.

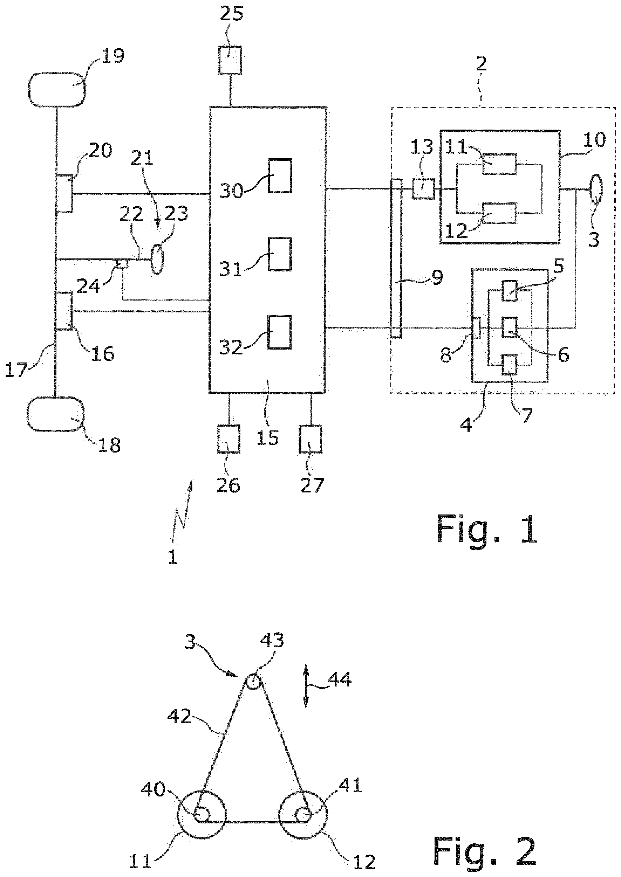

Die Fig. 1 zeigt ein Lenksystem 1 mit einem Lenkmodul 2. Das Lenkmodul 2 kann in oder an einem Fahrzeug angeordnet werden. Insbesondere kann es an einem Fahrzeug nachgerüstet werden. Es ist jedoch auch denkbar, das Lenkmodul 2 außerhalb des Fahrzeugs vorzusehen. Grundsätzlich kann es an jeder beliebigen Stelle in einem Fahrzeug angeordnet werden.

Das Lenkmodul 2 weist ein Lenkeingabeelement 3 auf, das im gezeigten Ausführungsbeispiel als Lenkrad ausgebildet ist. Das Lenkeingabeelement 3 kann abnehmbar und insbesondere austauschbar sein. Die durch das Lenkeingabeelement 3 eingeleitete Bewegung, im vorliegenden Fall eine Drehbewegung, kann durch eine Sensoreinrichtung 4 erfasst werden. Insbesondere kann ein Lenkeingabewinkel erfasst werden. Die Sensoreinrichtung 4 kann redundant ausgeführt sein und zu diesem Zweck mindestens zwei, vorzugsweise drei, Sensoren 5 bis 7 aufweisen. Durch eine Auswahleinrichtung 8 kann bestimmt werden, welches Sensorsignal der Sensoren 5 bis 7 über eine Schnittstelle 9 ausgegeben wird.

Weiterhin weist das Lenkmodul 2 eine Stelleinrichtung 10 auf, wobei die Stelleinrichtung 10 ebenfalls redundant ausgebildet sein kann. Insbesondere kann die Stelleinrichtung 10 einen ersten Aktor 11 und einen zweiten Aktor 12 aufweisen. Der erste und der zweite Aktor 11, 12 können beispielsweise als bürstenlose Elektromotoren ausgebildet sein. Die Aktoren 11, 12 werden durch dasselbe Ansteuersignal angesteuert, wodurch sich ergibt, dass sie eine Bewegung in dieselbe Richtung erzeugen. Insbesondere bewirken sie eine Krafteinleitung in das Lenkeingabeelement 3 in dieselbe Richtung.

Um die Aktoren 11, 12 vor Überlastung zu schützen, kann eine Schutzeinrichtung 13 vorgesehen sein. Die Schutzeinrichtung 13 kann insbesondere als Widerstand ausgebildet sein.

Über die Schnittstelle 9 sind sowohl die Sensoreinrichtung 4 als auch die Stelleinrichtung 10 signaltechnisch mit einem Steuergerät 15 des Lenksystems 1 verbunden. Die Verbindung kann wie hier dargestellt drahtgebunden, beispielsweise durch ein Kabel, erfolgen. Jedoch ist auch eine drahtlose signaltechnische Verbindung, beispielsweise eine Funkverbindung, denkbar.

Durch das Steuergerät 15 kann ein Ansteuersignal für die Stelleinrichtung 10 erzeugt werden. Außerdem kann durch das Steuergerät 15 ein Ansteuersignal für einen Lenksteller 16 erzeugt werden. Der Lenksteller 16 kann ebenfalls signaltechnisch mit dem Steuergerät 15 verbunden sein. Der Lenksteller 16 kann redundant ausgebildet sein. Insbesondere kann er mehrere Aktoren, vorzugsweise zwei oder drei Aktoren, aufweisen. Im gezeigten Ausführungsbeispiel kann der Lenksteller 16 ein Lenkgetriebe 17 antreiben und demzufolge einen Radeinschlagwinkel der Räder 18, 19 einstellen. Das Lenkeingabeelement 3 weist keine mechanische Verbindung zu dem Lenkgetriebe 17 und/oder den Rädern 18, 19 auf.

Das Steuergerät 15 kann weiterhin mit einer Sensoreinrichtung 20 signaltechnisch verbunden sein. Die Sensoreinrichtung 20 kann ebenfalls redundant ausgebildet sein. Durch die Sensoreinrichtung 20 kann eine die Fahrtrichtung des Fahrzeugs beschreibende Größe erfasst werden. Beispielsweise kann ein Radeinschlagwinkel erfasst werden. Die Sensoreinrichtung 20 kann auch in den Lenksteller 16 integriert sein. Weiterhin ist es denkbar, zusätzlich zur Sensoreinrichtung 20 eine Sensoreinrichtung in den Lenksteller 16 zu integrieren. Beispielsweise kann dann ein von dem Lenksteller 16 aufgenommener Strom erfasst werden und können daraus Rückschlüsse auf die Fahrtrichtung gezogen werden.

Es ist eine weitere Lenkeinrichtung 21 mit eventuell einer Lenksäule 22 und einem weiteren Lenkeingabeelement 23 vorgesehen. Durch eine Sensoreinrichtung 24, die an der Lenksäule 22 angeordnet sein kann, kann beispielsweise ein Lenkeingabewinkel an der Lenksäule 22 erfasst werden und an das Steuergerät 15 übertragen werden. Die Sensoreinrichtung 24 kann redundant ausgeführt sein.

Weiterhin kann eine Sensoreinrichtung 25, die ebenfalls redundant ausgeführt sein kann, vorgesehen sein. Durch die Sensoreinrichtung 25 können beispielsweise auf das Fahrzeug wirkende Kräfte erfasst werden. Die Sensoreinrichtung 25 kann beispielsweise als Dehnmessstreifen ausgebildet sein. Beispielsweise können über die Sensoreinrichtung 25 Einwirkungen auf das Fahrzeug erfasst werden, die ein Benutzer an einem Lenkeingabeelement spüren würde, wenn dieses mechanisch mit den Rädern des Fahrzeugs verbunden ist. Zudem kann das Steuergerät 15 mit einem Umschaltelement 26 verbunden sein.

In einem ersten Betriebsmodus, einem Passiv-Modus, der durch eine Anzeigeeinrichtung 27 angezeigt werden kann, lenkt eine Person das Fahrzeug über das weitere Lenkeingabeelement 23. Die Bewegung des Lenkeingabeelements 23 bzw. der Lenksäule 22 wird über die Sensoreinrichtung 24 erfasst. Dieser so erfasste Lenkeingabewinkel stellt auch eine Größe dar, die die Fahrtrichtung des Fahrzeugs beschreibt. Das Steuergerät 15, welches drei redundant vorgesehene CPUs 30 bis 32 aufweisen kann, konfiguriert, unter Berücksichtigung des Sensorsignals der Sensoreinrichtung 24 ein Ansteuersignal für die Stelleinrichtung 10 zu erzeugen, die ein Nachführen des Lenkeingabeelements 3 bewirkt. Das Lenkeingabeelement 3 führt demnach dieselbe Bewegung durch wie das weitere Lenkeingabeelement 23.

Es kann auch vorgesehen sein, dass aufgrund des Sensorsignals der Sensoreinrichtung 24 durch das Steuergerät 15 ein Ansteuersignal für den Lenksteller 16 erzeugt wird und in Folge dessen der Lenksteller 16 eine Lenkbewegung der Räder 18, 19 bewirkt. Diese Bewegung kann beispielsweise durch die Sensoreinrichtung 20 erfasst werden. Durch das Steuergerät 15 kann ein Soll-Ist-Vergleich durchgeführt werden und gegebenenfalls kann das Ansteuersignal für den Lenksteller 16 korrigiert werden, um die durch das weitere Lenkelement 23 eingeleitete Lenkbewegung richtig umzusetzen. Es kann also eine Regelung erfolgen.

Durch das Umschaltelement 26 kann von dem beschriebenen Passiv-Modus in einen Aktiv-Modus umgeschaltet werden, der ebenfalls durch die Anzeigeeinrichtung 27 angezeigt werden kann. Im Aktiv-Modus kann durch einen Benutzer über das Lenkeingabeelement 3 eine Lenkbewegung eingeleitet werden. Diese Bewegung kann durch die Sensoreinrichtung 4 erfasst und ein entsprechendes Sensorsignal an das Steuergerät 15 ausgegeben werden. Unter Berücksichtigung dieses Sensorsignals kann ein Ansteuersignal für den Lenksteller 16 erzeugt werden.

Um einem Benutzer ein Straßengefühl zu vermitteln, können die Sensorsignale einer oder mehrerer der Sensoreinrichtungen 20, 25 durch das Steuergerät 15 bei der Erzeugung eines Ansteuersignals für die Stelleinrichtung 10 berücksichtigt werden. Auch das durch die Sensoreinrichtung 4 erzeugte Sensorsignal kann berücksichtigt werden, um das Ansteuersignal für die Stelleinrichtung 10 zu ermitteln. Das Steuergerät 15 kann so konfiguriert sein, dass das Ansteuersignal für die Stelleinrichtung 10 derart erzeugt wird, das eine Rückstellkraft (Lenkgegenkraft) oder ein Rückstellmoment an dem Lenkeingabeelement 3 erzeugt wird, welche ein Benutzer auch spüren würde, wenn er ein Fahrzeug über ein mechanisch mit einem Lenkgetriebe verbundenes Lenkeingabeelement, wie das Lenkeingabeelement 23, verspüren würde. Außerdem kann das Ansteuersignal für die Stelleinrichtung 10 so erzeugt werden, dass Einwirkungen auf das Fahrzeug, beispielsweise wenn das Fahrzeug gegen einen Bordstein gefahren wird, durch einen Benutzer am Lenkeingabeelement 3 spürbar sind. Das Steuergerät 15 kann demnach konfiguriert sein, dem Benutzer eine haptische Rückmeldung am Lenkeingabeelement 3 zu geben.

Es versteht sich, dass das Lenkmodul 2 auch bei einem Fahrzeug zum Einsatz kommen kann, das keine Umschaltfunktion und auch kein weiteres Lenkeingabeelement 23 aufweist.

Die Fig. 2 zeigt stark schematisiert eine Draufsicht von oben auf den ersten und zweiten Aktor 11, 12, die in diesem Fall als Elektromotoren mit jeweils einem Abtrieb 40, 41 ausgebildet sind. Der erste und der zweite Aktor 11, 12 sind über ein Übertragungselement 42, das im vorliegenden Fall als Riemen ausgebildet ist, mit einer Achse 43 des Lenkeingabeelements 3 wirkverbunden. Um das Übertragungselement 42 spannen zu können, ist das Lenkeingabeelement 3 in Doppelpfeilrichtung 44 verstellbar.

## Patentansprüche

1. Lenksystem mit einem Lenkmodul (2) für ein Fahrzeug mit einem Lenkeingabeelement (3) und einer zumindest einen Sensor (5, 6, 7) aufweisenden Sensoreinrichtung (4) zur Erfassung der Position oder Stellung des Lenkeingabeelements (3) sowie einer auf das Lenkeingabeelement (3) wirkenden Stelleinrichtung (10) mit einem ersten Aktor (11), wobei die Stelleinrichtung (10) redundant ausgebildet ist und einen zweiten Aktor (12) aufweist und wobei ein Steuergerät (15) vorgesehen ist, mit dem das Lenkmodul (2) signaltechnisch verbunden ist, **dadurch gekennzeichnet, dass** ein Umschaltelement (26) vorgesehen ist, durch das von einem Passiv-Modus, in dem das Lenkeingabeelement (3) des Lenkmoduls (2) einem weiteren Lenkeingabeelement (23) nachgeführt wird, in einen Aktiv-Modus, in dem das Lenkeingabeelement (3) der Fahrzeuglenkung dient, umgeschaltet werden kann.

2. Lenksystem nach Anspruch 1, **dadurch gekennzeichnet, dass** die Sensoreinrichtung (4) redundant ausgebildet ist und zumindest zwei, vorzugsweise drei, Sensoren (5, 6, 7) zur Erfassung der Position oder Stellung des Lenkeingabeelements (3) aufweist.

3. Lenksystem nach einem der vorhergehenden Ansprüche, **dadurch gekennzeichnet, dass** das Lenkmodul (2) eine Schnittstelle (9) zur signaltechnischen Verbindung mit dem Steuergerät (15) aufweist.

4. Lenksystem nach einem der vorhergehenden Ansprüche, **dadurch gekennzeichnet, dass** eine Schutzeinrichtung (13) zum Schutz der Aktoren (11, 12) vor Überlastung vorgesehen ist.

5. Lenksystem nach einem der vorhergehenden Ansprüche, **dadurch gekennzeichnet, dass** die Aktoren (11, 12) mit dem Lenkeingabeelement (3) über ein Übertragungselement (42), insbesondere einen Riemen oder eine Kette, gekoppelt sind.

6. LenksystemI nach einem der vorhergehenden Ansprüche, **dadurch gekennzeichnet, dass** die Position eines der Elemente erster Aktor (11), zweiter Aktor (12), Lenkeingabeelement (3) bezüglich zumindest eines anderen der Elemente erster Aktor (11), zweiter Aktor (12), Lenkeingabeelement (3) verstellbar ist, um das Übertragungselement (42) spannen zu können.

7. Lenksystem nach einem der vorhergehenden Ansprüche , **dadurch gekennzeichnet, dass** das Steuergerät (15) mit einem Lenksteller (16) signaltechnisch verbunden ist und konfiguriert ist, unter Berücksichtigung der durch die Sensoreinrichtung (4) erfassten Position oder Stellung des Lenkeingabeelements (3) ein Ansteuersignal für den Lenksteller (16) zu erzeugen.

8. Lenksystem nach einem der vorhergehenden Ansprüche, **dadurch gekennzeichnet, dass** eine Sensoreinrichtung (20, 24) zur Erfassung einer die Fahrtrichtung des Fahrzeugs beschreibenden Größe vorgesehen ist, und das Steuergerät (15) konfiguriert ist, unter Berücksichtigung der erfassten Größe ein Ansteuersignal für die Stelleinrichtung (10) zu erzeugen.

9. Lenksystem nach einem der vorhergehenden Ansprüche, **dadurch gekennzeichnet, dass** das Steuergerät (15) konfiguriert ist, ein Ansteuersignal für die Stelleinrichtung (10) zu erzeugen, um eine Lenkgegenkraft an dem Lenkeingabeelement (3) zu bewirken.

10. Lenksystem nach Anspruch 9, **dadurch gekennzeichnet, dass** das Steuergerät (15) konfiguriert ist, das Ansteuersignal für die Stelleinrichtung (10) zum Bewirken einer Lenkgegenkraft unter Berücksichtigung eines Sensorsignals zu erzeugen.

11. Lenksystem nach einem der vorhergehenden Ansprüche, **dadurch gekennzeichnet, dass** die Stelleinrichtungen (10, 16) des Lenksystems (1) und die Sensoreinrichtungen (4, 20, 25) des Lenksystems (1) redundant ausgebildet sind.

12. Lenksystem nach einem der vorhergehenden Ansprüche, **dadurch gekennzeichnet, dass** zumindest einige der für die Erzeugung der von dem Steuergerät (15) an die Stelleinrichtung (10) und/oder den Lenksteller (16) ausgegebenen Ansteuersignale verwendeten Parameter einstellbar sind.

13. Lenksystem nach einem der vorhergehenden Ansprüche, **dadurch gekennzeichnet, dass** das Steuergerät (15) konfiguriert ist, ein Ansteuersignal für die Stelleinrichtung (10) zu erzeugen, um das Lenkeingabeelement (3) bei fehlender Lenkeingabe durch einen Benutzer in eine Nullstellung zu überführen.

## Claims

1. Steering system with a steering module (2) for a vehicle with a steering input element (3) and a sensor assembly (4) comprising at least one sensor (5, 6, 7) for detecting the position or setting of the steering input element (3), and an actuating device (10) taking effect on the steering input element (3), with a first actuator (11), wherein the actuating device (10) is configured as redundant and comprises a second actuator (12), and wherein a control device (15) is provided, with which the steering module (2) is connected by way of signal technology, **characterized in that** a switchover element (26) is provided, by means of which a switchover can be effected from a passive mode, in which the steering input element (3) of the steering module (2) is arranged downstream of a further steering input element (23), into an active mode, in which the steering input element (3) serves to steer the vehicle.

2. Steering system according to claim 1, **characterized in that** the sensor device (4) is configured as redundant and comprises at least two, preferably three, sensors (5, 6, 7) to detect the position or setting of the steering input element (3).

3. Steering system according to any one of the preceding claims, **characterized in that** the steering module (2) comprises an interface (9) for the connection by way of signal technology to the control device (15).

4. Steering system according to any one of the preceding claims, **characterized in that** a protective device (13) is provided so as to protect the actuators (11, 12) against overload.

5. Steering system according to any one of the preceding claims, **characterized in that** the actuators (11, 12) are coupled to the steering input element (3) by means of a transfer element (42), in particular a belt or chain.

6. Steering system according to any one of the preceding claims, **characterized in that** the position of one of the elements of first actuator (11), second actuator (12), and steering input element (3) is adjustable in relation to at least one other of the elements of first actuator (11), second actuator (12), and steering input element (3), in order to be able to tension the transfer element (42).

7. Steering system according to any one of the preceding claims, **characterized in that** the control device (15) can be connected by way of signal technology to a steering actuating device (16) and is configured such as to generate an actuation signal for the steering setting device (16) by taking account of the detected position or setting of the steering input element (3).

8. Steering system according to any one of the preceding claims, **characterized in that** a sensor device (20, 24) is provided for detecting a value describing the direction of travel of the vehicle, and the control device (15) is configured such as to generate an actuation signal for the actuating device (10) by taking account of the detected value.

9. Steering system according to any one of the preceding claims, **characterized in that** the control device (15) is configured such as to generate an actuation signal for the actuating device (10), in order to exert a steering counter-force on the steering input element (3).

10. Steering system according to claim 9, **characterized in that** the control device (15) is configured such as to generate the actuation signal for actuating device (10) in order to put into effect a steering counter-force by taking account of a sensor signal.

11. Steering system according to any one of the preceding claims, **characterized in that** the actuating devices (10, 16) of the steering system (1) and the sensor devices (4, 20, 25) of the steering system (1) are configured as redundant.

12. Steering system according to any one of the preceding claims, **characterized in that** at least some of the parameters are adjustable which are used for the generating of the actuation signals issued by the control device (15) to the actuating device (10) and/or to the steering actuating device (16).

13. Steering system according to any one of the preceding claims, **characterized in that** the control device (15) is configured such as to generate an actuation signal for the actuating device (10) in order to transfer the steering input element (3) into a zero setting in the event of no steering input being provided by a user.

## Revendications

1. Système de direction avec un module de direction (2) pour un véhicule avec un élément d'entrée de direction (3) et un appareil de capteur (4) présentant au moins un capteur (5, 6, 7) pour la détection de la position ou posture de l'élément d'entrée de direction (3) ainsi qu'un appareil de réglage (10) agissant sur l'élément d'entrée de direction (3) avec un premier actionneur (11), dans lequel l'appareil de réglage (10) est réalisé redondant et présente un deuxième actionneur (12), et dans lequel un outil de commande (15) est prévu, avec lequel le module de direction (2) est relié par signal, **caractérisé en ce qu'**un élément de commutation (26) est prévu, par lequel il peut être commuté d'un mode passif, dans lequel l'élément d'entrée de direction (3) du module de direction (2) est guidé après un autre élément d'entrée de direction (23), à un mode actif, dans lequel l'élément d'entrée de direction (3) sert à la direction du véhicule.

2. Système de direction selon la revendication 1, **caractérisé en ce que** l'appareil de capteur (4) est réalisé redondant et présente au moins deux, de préférence trois, capteurs (5, 6, 7) pour la détection de la position ou posture de l'élément d'entrée de direction (3).

3. Système de direction selon l'une quelconque des revendications précédentes, **caractérisé en ce que** le module de direction (2) présente une interface (9) pour la liaison par signal à l'outil de commande (15).

4. Système de direction selon l'une quelconque des revendications précédentes, **caractérisé en ce qu'**un dispositif de protection (13) est prévu pour la protection des actionneurs (11, 12) contre la surcharge.

5. Système de direction selon l'une quelconque des revendications précédentes, **caractérisé en ce que** les actionneurs (11, 12) sont couplés avec l'élément d'entrée de direction (3) par le biais d'un élément de transmission (42), en particulier une courroie ou une chaîne.

6. Système de direction selon l'une quelconque des revendications précédentes, **caractérisé en ce que** la position d'un des éléments parmi le premier actionneur (11), le deuxième actionneur (12) et l'élément d'entrée de direction (3) est réglable par rapport à au moins un autre des éléments parmi le premier actionneur (11), le deuxième actionneur (12) et l'élément d'entrée de direction (3) pour pouvoir tendre l'élément de transmission (42).

7. Système de direction selon l'une quelconque des revendications précédentes, **caractérisé en ce que** l'outil de commande (15) est relié à un régleur de direction (16) par signal et est configuré, en tenant compte de la position ou posture de l'élément d'entrée de direction (3) détectée par le appareil de capteur (4), pour générer un signal de commande pour le régleur de direction (16).

8. Système de direction selon l'une quelconque des revendications précédentes, **caractérisé en ce qu'**un appareil de capteur (20, 24) est prévu pour la détection d'une grandeur décrivant le sens de circulation du véhicule, et l'outil de commande (15) est configuré pour générer, en tenant compte de la grandeur détectée, un signal de commande pour l'appareil de réglage (10).

9. Système de direction selon l'une quelconque des revendications précédentes, **caractérisé en ce que** l'outil de commande (15) est configuré pour générer un signal de commande pour le appareil de réglage (10) pour provoquer une contre force de direction au niveau de l'élément d'entrée de direction (3).

10. Système de direction selon la revendication 9, **caractérisé en ce que** l'outil de commande (15) est configuré pour générer le signal de commande pour le appareil de réglage (10) pour provoquer une contre-force de direction en tenant compte d'un signal de capteur.

11. Système de direction selon l'une quelconque des revendications précédentes, **caractérisé en ce que** les dispositifs de réglage (10, 16) du système de direction (1) et les dispositifs de capteur (4, 20, 25) du système de direction (1) sont réalisés redondants.

12. Système de direction selon l'une quelconque des revendications précédentes, **caractérisé en ce qu'**au moins quelques-uns des paramètres utilisés pour la génération des signaux de commande émis par l'outil de commande (15) à l'appareil de réglage (10) et/ou au régleur de direction (16) sont réglables.

13. Système de direction selon l'une quelconque des revendications précédentes, **caractérisé en ce que** l'outil de commande (15) est configuré pour générer un signal de commande pour l'appareil de réglage (10), pour amener l'élément d'entrée de direction (3) en l'absence d'entrée de direction par un utilisateur dans la position zéro.
